# EUROPEAN PATENT SPECIFICATION

(11) **EP 0 984 999 B1**
(45) Date of publication and mention of the grant of the patent: **09.07.2003**
(21) Application number: 98924065.0
(22) Date of filing: 28.05.1998
(51) Int. Cl.: C08K 3/20, C08K 5/02, D04H 3/16, B32B 19/06, E04B 1/74

(54) **AN INSULATING ELEMENT AND A PROCESS FOR THE PREPARATION THEREOF**
EIN ISOLIERUNGSELEMENT UND EIN VERFAHREN ZU DESSEN HERSTELLUNG
ELEMENT ISOLANT ET SON PROCEDE DE PREPARATION

(30) Priority: 28.05.1997 DK 61597
(43) Date of publication of application: 15.03.2000
(73) Proprietor: Rockwool International A/S, 2640 Hedehusene (DK)
(72) Inventor: BUNE, Carsten, William, DK-4000 Roskilde (DK); CLAUSEN, Anders, Ulf, DK-4600 Koge (DK)
(74) Representative: Kyed, Iver
(86) International application number: DK9800221
(87) International publication number: WO98054245

(56) References cited:
- EP-A- 0 286 202
- GB-A- 2 077 310
- US-A- 4 006 114
- US-A- 4 440 888
- FILE WPI, Derwent Accession No. 94-268750, TORAY IND. INC., "Composite Filtering Material for Building Air Conditioning - Comprises Sheet of Inorganic Fibre and Sheet of Organic Fibre e.g., Melt-Blown Non-Woven Fabric, Give Good Dust Moulding Property"; & JP,A,06 198 108 (19-07-95) DW9433.
- FILE WPI, Derwent Accession No. 81-10755D, SHIRAKAMI K., "Polyolefin Resin Matting - with Natural Rush-Like Appearance with High Flame Retardancy"; & JP,A,55 158 353 (09-12-80) DW8107.
- FILE WPI, Derwent Accession No. 80-10226C, NGK INSULATORS LTD., "High-Strength, Flame-Retardant Sound Absorbing Material - Contg. Glass Fibre, Inorganic Powder, e.g. Silica' Foams, Resin Binder, Antimony Tri:Oxide and Chlorinated Paraffin"; & JP,A,54 163 001 (25-12-79) DW8006.

## Description

The present invention concerns an insulating element comprising a mineral fibre layer having a coating in the form of a fibrous web of polypropylene fibres prepared by meltblowing directly on the mineral fibre layer.

US patent No. 5,501,872 describes mineral fibre batts which on all sides are coated with a fibrous web as described above. This coating serves partly to make it more pleasant to handle and touch the mineral fibre batts than non-coated batts, and partly to reduce the release of dust and particles, including fibres, during handling and mounting of the batts.

The presence of a fibrous coating on a mineral fibre product involves the disadvantage that the high fire retardancy of the mineral fibre product is affected adversely. Consequently, the thickness of the coating should be as thin as possible. By using a meltblowing technique it is possible to provide a web of very thin fibres, viz. fibres having a diameter of less than 20 µm, provided that the melt, which in the meltblowing apparatus is converted into fibres, has a suitable viscosity at the melting temperature.

It is known to increase the fire retardancy of polyolefines by admixing a fire retardant in the form of a blend of a chlorinated paraffin and an inorganic component, such as antimony trioxide.

US patent No. 4,440,888 thus describes hot-melt adhesive comprising a blend of a modified polyethylene resin, a tackifying resin and a fire retardant in the form of a combination of a halogenated organic compound, such as a chlorinated paraffin, and an inorganic component, such as antimony trioxide.

In the known adhesive the modified polyethylene resin preferably constitutes 25-35 weight-% and the fire retardant 35-65 weight-%, the amount of the inorganic component preferably constituting from 3 to 15 weight-% of the adhesive.

It is also known to increase the fire retardancy of polypropylene by admixing a fire retardant consisting of 10 parts by weight of antimony trioxide and 30 parts by weight of chlorinated paraffin at a ratio of 60:40.

In an attempt to increase the resistance of the fibrous coating on an insulating element of the kind stated in the preamble by admixing in the melt used in the meltblowing a fire retardant in the form of a known blend of a chlorinated paraffin and antimony trioxide and at a known ratio of polypropylene to fire retardant it has been found that due to the viscosity increasing effect of the fire retardant it is impossible to obtain a web of the desired fine fibres.

Attempts to lower the viscosity of the melt by increasing the melting temperature have not solved the problem, since the use of melting temperatures exceeding 200 °C results in a beginning decomposition of the chlorinated paraffin.

By extensive research it has been found that by using other ratios of polymer to flame retardant and of the inorganic components of the fire retardant to the organic components a melt is obtainable having a viscosity at a melting temperature of above 180 °C which by meltblowing allows formation of a web of very fine fibres, i.e. fibres having a fibre thickness of less than 20 µm.

The invention is characterized in that the web is constituted by fibres containing a fire retardant in the form of a blend of antimony trioxide and a chlorinated paraffin, wherein the fire retardant constitutes 15-30 weight-% of the fibres, and wherein the weight ratio of antimony trioxide to chlorinated paraffin is between 1:3 and 1.5:1.

In a particularly preferred embodiment of the insulating element according to the invention, the fire retardant constitutes about 20 weight-% of the polymer fibres, and the weight ratio of antimony trioxide to chlorinated paraffin is about 1:1. A melt prepared from such a blend has at a temperature of 180-240 °C a viscosity corresponding to a melt mass flow rate (MFR) according to ASTM 1238-95 of from 200-600 g/10 min., and is suitable for preparing a web of thin fibres by using commercially available meltblowing equipment.

The chlorinated paraffin is preferably a paraffin wax containing from 40 to 75 weight-% of chlorine.

The mineral fibre layer preferably consists of rock fibres or slag fibres, but may also be made of glass fibres or other synthetic inorganic fibres.

The mineral fibre layer is preferably in the form of a batt, a matt of a slab comprising two main surfaces (an upper and a lower surface) and side and end surfaces.

The mineral fibre layer may also have other forms depending on the contemplated field of application, e.g. it may be in the form of a web, a sheet or a tube, e.g. a tube for pipe insulation.

When the mineral fibre layer is in the form of a batt comprising an upper and a lower main surface and side and end surfaces it is preferably provided with a coating on all six sides.

The invention further concerns a process for the preparation of an insulating element comprising a mineral fibre layer with a coating in the form of a fibrous web of polypropylene fibres, the process being characterized in that by meltblowing a melt of polypropylene containing a fire retardant in the form of a blend of antimony trioxide and a chlorinated paraffin, wherein the fire retardant constitutes 15-30 weight-% of the polypropylene melt, and the weight ratio of antimony trioxide to chlorinated paraffin is between 1:3 and 1.5;1, a coating is provided on the mineral fibre layer by direct application.

The propylene tends to decompose during the meltblowing process and in a preferred embodiment of the process of the invention one or more antioxidants are incorporated into the polypropylene melt. A preferred antioxidant is commercially available under the trade name Irganox B561 FF (C) and consists of 80% tris(2,4-di-tert-butylphenyl)phosphite and 20% pentaerythritoltetrakis (3(3,5-di-tert-butyl-4-hydroxy)propionate.

The antioxidant is preferably used in an amount of from 0.1 to 1 weight-% of the polypropylene melt.

It may also be advantageous to incorporate a stabilizer, preferably in the form of a metal soap, such as Ca·Zn stearate, into the propylene melt. A suitable Ca·Zn stearate stabilizer is commercially available under the trade name Irgastab CZ 2000. The stabilizer is preferably used in an amount of 0.1-1 weight-% of the propylene melt.

When the mineral fibre layer is in the form of a batt and comprises an upper and a lower main surface as well as two side surfaces and two end surfaces it is preferred to provide all six sides with a coating. The preparation of such a completely encapsulating coating may take place by coating the surfaces successively or by coating two opposite surfaces simultaneously.

In case of successive coating of the surfaces it is preferred to use meltblowing nozzles which are positioned along a conveying path for the mineral fibre batts. The nozzles used may be positioned mutually off-set in the direction of movement of the mineral fibre batt and on opposite sides thereof, as seen both vertically and horizontally.

The nozzles for applying coatings on the side and end surfaces of the batt may also be positioned on the same side of the conveying path, which in that case may comprise means for turning the batts about a vertical axis during conveying thereof.

Particularly suited processes and nozzles for providing coatings on mineral fibre layers are described in Danish patent applications nos. 0612/97 and 0613/97 filed concurrently herewith (our reference nos. P199600508DK and P199600509DK).

The insulating elements of the invention may be used for thermal or fire insulation or protection or for noise reduction or regulation.

The invention is described in the following, reference being made to the examples below.

### Example 1

A mineral fibre batt having the dimensions 90 x 60 x 10 cm and a density of 30 kg/m³ was coated on all six sides with a melt blown fibrous layer prepared from a melt consisting of 2 parts by weight of polypropylene homopolymer, 0.25 parts by weight of antimony trioxide and 0.25 parts by weight of chlorinated paraffin (chlorinated aliphatic hydrocarbons containing 72% chlorine (commercial trade name Hordaresin NP70 and marketed by Hoechst).

The viscosity of the melt at 220 °C corresponded to a MFR value of 363 g/10 min. and the fibres obtained had a thickness of about 15 µm.

### Example 2

A mineral fibre batt having the same dimensions and density as set forth in Example 1 was coated on all six sides with a meltblown fibrous layer obtained from a melt consisting of 79.3% by weight of polypropylene homopolymer, 10% chlorinated aliphatic hydrocarbons containing 72.2% by weight of chlorine (commercially available under the trade name Hordaresin CH 171 F), 10% by weight of antimony trioxide, 0.5% by weight of antioxidant (Irganox B561 FF(C) and 0.2% by weight of a stabilizer in the form of Ca·Zn stearate (Irgastab CZ 2000).

The presence of the antioxidant and the stabilizer allowed the meltblowing temperature to be increased to about 230 °C without any significant decomposition or slag formation, and due to a corresponding decrease of viscosity fibres having a thickness of below 10 µm were obtained.

## Claims

1. An insulating element comprising a mineral fibre layer having a coating in the form of a fibrous web of polypropylene fibres prepared by meltblowing directly on the mineral fibre layer, **characterized in that** the web is constituted by fibres containing a fire retardant in the form of a blend of antimony trioxide and a chlorinated paraffin, wherein the fire retardant constitutes 15-30 weight-% of the polymer fibres, and wherein the weight ratio of antimony trioxide to chlorinated paraffin is between 1:3 and 1.5:1.

2. An insulating element according to claim 1, **characterized in that** the fire retardant constitutes about 20 weight-% of the fibres, and that the weight ratio of antimony trioxide to chlorinated paraffin is about 1:1.

3. An insulating element according to claim 1 or 2, **characterized in that** the chlorinated paraffin is a paraffin wax with a chlorine content of 45-75 weight-%.

4. A process for the preparation of an insulating element comprising a mineral fibre layer with a coating in the form of a fibrous web of polypropylene fibres, **characterized in that** by meltblowing a melt of polypropylene containing a fire retardant in the form of a blend of antimony trioxide and a chlorinated paraffin, wherein the fire retardant constitutes 15-30 weight-% of the polypropylene melt, and the weight ratio of antimony trioxide to chlorinated paraffin is between 1:3 and 1.5:1, a coating is provided on the mineral fibre layer by direct application.

5. A process according to claim 4, **characterized in** using a polypropylene melt containing an antioxidant.

6. A process according to claim 5, **characeterized in that** the antioxidant is used in an amount of from 0.1 to 1 weight-% of the polypropylene melt.

7. A process according to claim 4, **characterized in** using a polypropylene melt containing a stabilizer, preferably in the form of a metal soap.

8. A process according to claim 7, **characterized in that** the stabilizer is used in an amount of from 0.1 to 1 weight-% of the polypropylene melt.

## Patentansprüche

1. Isolierelement, enthaltend eine Mineralfaserlage, die eine Beschichtung in Form einer Faserbahn aus Polypropylenfasern hat, die durch Schmelzblasen direkt auf die Mineralfaserlage hergestellt wird, **dadurch gekennzeichnet, daß** die Bahn aus Fasern gebildet ist, die ein feuerhemmendes Mittel in Form einer Mischung aus Antimontrioxid und einem chlorierten Paraffin enthalten, wobei das feuerhemmende Mittel 15-30 Gew.-% der Polymerfasern bildet und wobei das Gewichtsverhältnis von Antimontrioxid zu chloriertem Paraffin zwischen 1:3 und 1,5:1 ist.

2. Isolierelement nach Anspruch 1,
**dadurch gekennzeichnet, daß** das feuerhemmende Mittel etwa 20 Gew.-% der Fasern bildet und daß das Gewichtsverhältnis von Antimontrioxid zu chloriertem Paraffin etwa 1:1 ist.

3. Isolierelement nach Anspruch 1 oder 2,
**dadurch gekennzeichnet, daß** das chlorierte Paraffin ein Paraffinwachs mit einem Chlorgehalt von 45-75 Gew.-% ist.

4. Verfahren zur Herstellung eines Isolierelements, das eine Mineralfaserlage mit einer Beschichtung in Form einer Faserbahn aus Polypropylenfasern enthält, **dadurch gekennzeichnet, daß** durch Schmelzblasen einer Polypropylenschmelze, die ein feuerhemmendes Mittel in Form einer Mischung aus Antimontrioxid und einem chlorierten Paraffin enthält, wobei das feuerhemmende Mittel 15-30 Gew.-% der Polymerfasern bildet und wobei das Gewichtsverhältnis von Antimontrioxid zu chloriertem Paraffin zwischen 1:3 und 1,5:1 ist, eine Beschichtung durch direkten Auftrag auf der Mineralfaserlage gescharfen wird.

5. Verfahren nach Anspruch 4,
**dadurch gekennzeichnet, daß** eine Polypropylenschmelze verwendet wird, die ein Antioxidans enthält.

6. Verfahren nach Anspruch 5,
**dadurch gekennzeichnet, daß** das Antioxidans in einer Menge von 0,1-1 Gew.-% der Polypropylenschmelze verwendet wird.

7. Verfahren nach Anspruch 4,
**dadurch gekennzeichnet, daß** eine Polypropylenschmelze verwendet wird, die einen Stabilisator enthält, vorzugsweise in Form einer Metallseife.

8. Verfahren nach Anspruch 7,
**dadurch gekennzeichnet, daß** der Stabilisator in einer Menge von 0,1-1 Gew.-% der Polypropylenschmelze verwendet wird.

## Revendications

1. Elément isolant comprenant une couche de fibres minérales ayant un revêtement sous forme d'une toile fibreuse de fibres de polypropylène préparée par un procédé de fusion-soufflage directement sur la couche de fibres minérales, **caractérisé en ce que** la toile est constituée de fibres contenant un produit ignifuge réalisé à partir d'un mélange de trioxyde d'antimoine et d'une paraffine chlorée, dans lequel le produit ignifuge constitue 15 à 30 % en poids des fibres de polymère, et dans lequel le rapport en poids du trioxyde d'antimoine sur la paraffine chlorée est compris entre 1 : 3 et 1,5 : 1.

2. Elément isolant selon la revendication 1, **caractérisé en ce que** le produit ignifuge constitue environ 20 % en poids des fibres, et **en ce que** le rapport en poids du trioxyde d'antimoine sur la paraffine chlorée est d'environ 1 : 1.

3. Elément isolant selon la revendication 1 ou 2, **caractérisé en ce que** la paraffine chlorée est une cire paraffine avec une teneur en chlore de 45 à 75 % en poids.

4. Procédé de préparation d'un élément isolant comprenant une couche de fibres minérales avec un revêtement sous forme d'une toile fibreuse de fibres de polypropylène **caractérisé en ce qu'**en fusionnant-soufflant une masse fondue de polypropylène contenant un produit ignifuge réalisé à partir d'un mélange de trioxyde d'antimoine et d'une paraffine chlorée, dans lequel le produit ignifuge constitue 15 à 30 % en poids de la masse fondue de polypropylène, et le rapport en poids du trioxyde d'antimoine sur la paraffine chlorée est compris entre 1 : 3 et 1,5 : 1, un revêtement est formé sur la couche de fibre minérale par application directe.

5. Procédé selon la revendication 4, **caractérisé par** l'utilisation d'une masse fondue de polypropylène contenant un antioxydant.

6. Procédé selon la revendication 5, **caractérisé en ce que** l'antioxydant est utilisé dans une quantité allant de 0,1 à 1 % en poids de la masse fondue de polypropylène.

7. Procédé selon la revendication 4, **caractérisé par** l'utilisation d'une masse fondue de polypropylène contenant un stabilisant, de préférence de la forme d'un savon métallique.

8. Procédé selon la revendication 7, **caractérisé en ce que** le stabilisant est utilisé dans une quantité allant de 0,1 à 1 % en poids de la masse fondue de polypropylène.
